# DEMANDE DE BREVET EUROPEEN

(11) **EP 2 296 127 A1**
(43) Date de publication de la demande: **16.03.2011**
(21) Numéro de dépôt: 10305935.8
(22) Date de dépôt: 01.09.2010
(51) Int. Cl.: G08G 5/00, G01C 23/00

(54) **Procédé et dispositif de gestion d'informations dans un aéronef**

(30) Priorité: 14.09.2009 FR 0956298
(71) Demandeur: Airbus Operations, 31060 Toulouse (FR)
(72) Inventeur: Deleris, Yannick, 31330, GRENADE-SUR-GARONNE (FR); Broquet, Alexandre, 31500, TOULOUSE (FR); Pascal, Fabien, 31450, DONNEVILLE (FR)
(74) Mandataire: Imbert de Tremiolles, Ghislain

(57) **Abrégé**

L'invention a notamment pour objet un procédé et un dispositif de gestion d'informations dans un aéronef comprenant au moins un dispositif de restitution d'information à l'équipage et une pluralité d'équipements adaptés à transmettre des informations susceptibles d'être restituées sur le dispositif de restitution. Après avoir acquis une pluralité d'informations de ladite pluralité d'équipements et déterminé (300) un contexte selon un modèle prédéterminé, ladite pluralité d'informations est filtrée (320) selon au moins une règle, ladite au moins une règle étant liée audit contexte pour sélectionner au moins une information. Au moins une information sélectionnée est alors restituée sur le dispositif de restitution.

## Description

La présente invention concerne l'affichage d'informations dans un aéronef et plus particulièrement un procédé et un dispositif de gestion d'informations dans un aéronef.

Les systèmes d'affichage des aéronefs modernes permettent d'informer les membres d'équipage sur l'état de l'aéronef. Les informations sont généralement présentées, sur des écrans du cockpit et/ou de la cabine, sous forme de messages et de diagrammes synoptiques représentatifs des équipements de l'aéronef. Ces informations comprennent des données affichées en permanence ainsi que des données pouvant être affichées selon la phase de vol en cours et les alertes actives.

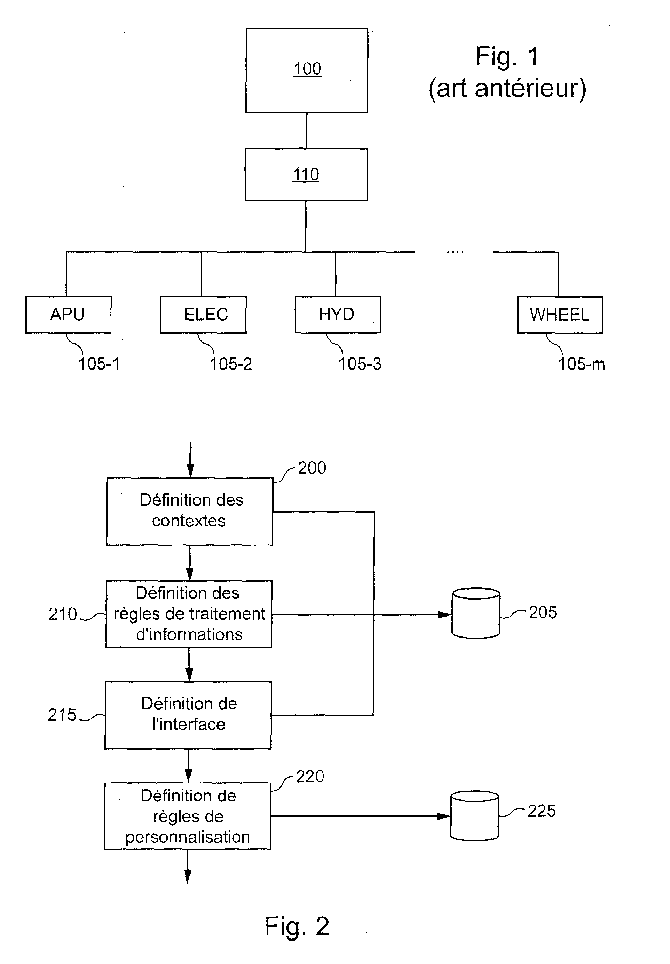

La figure 1 illustre un exemple simplifié d'un système d'affichage d'informations relatives aux équipements d'un aéronef, appelé SD (sigle de *System Display* en terminologie anglo-saxonne). Comme représenté, ce système comprend un écran de visualisation 100 reliés aux équipements 105-1 à 105-n de l'aéronef, par exemple des capteurs ou des calculateurs, via un module de sélection 110.

Les équipements 105-1 à 105-n sont, à titre d'illustration, l'unité de surveillance de l'unité auxiliaire de puissance (APU, sigle d'A*uxiliary Power Unit* en terminologie anglo-saxonne), une unité de surveillance du système électrique (ELEC), une unité de surveillance du système hydraulique (HYD) et une unité de surveillance du système de trains d'atterrissage (WHEEL).

Le module de sélection 110 comprend des entrées de sélections automatiques liées, par exemple, au système d'alarme de l'aéronef et des entrées de sélections manuelles activées par le pilote.

Les informations sont généralement affichées par pages, appelées SD pages, selon un format prédéterminé. Bien que de façon exceptionnelle certaines pages du système d'affichage présentent des informations relatives à plusieurs systèmes de l'aéronef, chaque page est en principe relative à un seul système de l'aéronef et présente une vue statique de ce système.

Le terme de « vue » fait ici référence à un regroupement d'informations. L'expression « vue statique », ou « page », fait référence à un regroupement invariable d'informations. Les informations présentées dans une vue statique peuvent évoluer mais pas la manière dont elles sont regroupées.

Ces pages sont notamment utilisées pour initialiser les systèmes correspondants, pour les surveiller, identifier et isoler des pannes ou encore valider une configuration. Les procédures opérationnelles recommandent de les consulter régulièrement, même en l'absence de panne.

L'équipage peut faire appel à chacune de ces pages, parfois dans des conditions critiques, pour accéder aux bonnes données au bon instant. Ces pages présentant des vues statiques des systèmes auxquels elles sont associées, elles doivent contenir un ensemble d'informations permettant de répondre à différents besoins et à différentes situations. Il en résulte que ces pages sont chargées. Ce phénomène est amplifié par la taille limitée des écrans d'affichage et la complexité croissante des équipements des aéronefs.

Par ailleurs, selon les situations, les besoins de l'équipage peuvent varier. Plusieurs pages différentes doivent alors être parcourues.

Il est observé ici que de telles vues statiques des systèmes d'un aéronef nécessitent un travail de la part de l'équipage afin de récupérer l'ensemble des informations nécessaire pour gérer une situation.

En outre, il a été observé que la définition de la vue joue un rôle déterminant pour la prise en compte d'information par l'équipage. Ainsi, par exemple, lorsque la situation d'un aéronef évolue d'une situation anormale vers une situation plus complexe, par exemple lorsqu'une nouvelle panne survient alors que la première est toujours présente, l'affichage de nouvelles informations peut représenter une difficulté pour sa prise en compte par l'équipage en raison d'autres informations préalablement affichées, par exemple dans la même couleur.

De nouvelles pages sont parfois créées pour répondre à des besoins opérationnels particuliers et aider l'équipage à réagir correctement. Ainsi, pour aider l'équipage à gérer une situation complexe, une ou plusieurs pages spécifiques peuvent être créées selon l'aéronef et les procédures mises en oeuvre. Globalement, leur nombre croît, ce qui génère une complexité dans leur gestion.

En outre, la gestion des systèmes d'un aéronef représentant l'une des quatre principales tâches qu'un pilote doit effectuer, la simplification de l'accès aux informations pertinentes des systèmes d'un aéronef permet de diminuer la charge de travail des pilotes.

L'invention a ainsi notamment pour objet d'aider l'équipage à accéder plus aisément aux informations pertinentes et l'assister dans la réalisation de sa tâche, notamment à travers des mécanismes de guidage.

L'invention a ainsi pour objet un procédé de gestion d'informations dans un aéronef, ledit aéronef comprenant au moins un dispositif de restitution d'information à l'équipage et une pluralité d'équipements adaptés à transmettre des informations susceptibles d'être restituées sur ledit au moins un dispositif de restitution, ce procédé comprenant les étapes suivantes,
- acquisition d'une pluralité d'informations de ladite pluralité d'équipements ;
- détermination d'un contexte selon un modèle prédéterminé ;
- filtrage de ladite pluralité d'informations selon au moins une règle, ladite au moins une règle étant liée audit contexte pour sélectionner au moins une information ; et,
- restitution de ladite au moins une information sélectionnée.

Le procédé selon l'invention permet ainsi de sélectionner des informations pertinentes à restituer selon des événements détectés et un contexte pour permettre aux membres d'équipage d'accéder directement à ces informations, de les identifier et d'agir en conséquence. Le procédé permet ainsi d'améliorer l'efficacité de l'équipage tout en réduisant sa charge.

Selon un mode de réalisation particulier, le procédé comprend en outre les étapes suivantes,
- ordonnancement d'informations parmi une pluralité d'informations sélectionnées ; et,
- restitution (335) desdites informations ordonnancées selon au moins une règle de guidage, ladite au moins une règle de guidage étant liée audit contexte pour sélectionner au moins une information.

Le procédé permet ainsi de définir des passages d'une vue à une autre pour guider l'utilisateur et lui permettre de suivre facilement des séquences de vues afin d'améliorer le guidage de l'utilisateur à travers les informations affichées.

De façon avantageuse, le procédé comprend en outre une étape de modification dudit filtrage de ladite pluralité d'informations et/ou dudit ordonnancement d'informations parmi une pluralité d'informations sélectionnées selon au moins une règle de guidage prédéterminée et selon ledit contexte déterminé selon au moins une caractéristique dudit aéronef.

Toujours selon un mode de réalisation particulier, ledit contexte est déterminé selon au moins une caractéristique dudit aéronef, au moins un état d'au moins un équipement de ladite pluralité d'équipements, au moins une donnée relative à l'environnement dudit aéronef et/ou au moins une donnée relative à un utilisateur dudit procédé. Ainsi, la connaissance du statut de l'aéronef, de ses équipements et/ou celle de l'utilisateur permettent de déterminer la pertinence des informations à restituer.

Ledit modèle de contexte est, de préférence, hiérarchique, ladite au moins une règle étant applicable à tous les éléments dépendant d'un noeud auquel ladite règle est appliquée, le niveau desdits éléments dans ledit modèle hiérarchique étant inférieur à celui dudit noeud, afin de faciliter la mise en oeuvre du procédé et sa maintenance.

De façon avantageuse, le procédé comprend en outre une étape de réception d'une indication représentative de la détection d'au moins un événement prédéterminé, ladite au moins une règle étant liée à ladite indication, permettant d'améliorer la sélection des informations à restituer et la mise en oeuvre de la restitution d'informations selon le concept appelé « poste éteint ».

Le procédé comprend en outre, de préférence, une étape de modification du format de ladite au moins une information sélectionnée pour faciliter sa compréhension par l'utilisateur à qui elle est destinée.

L'invention a également pour objet un programme d'ordinateur comprenant des instructions adaptées à la mise en oeuvre de chacune des étapes du procédé décrit précédemment lorsque ledit programme est exécuté sur un ordinateur, un dispositif comprenant des moyens adaptés à la mise en oeuvre de chacune des étapes de ce procédé ainsi qu'un aéronef comprenant ce dispositif. Les avantages procurés par ce programme d'ordinateur et ce dispositif sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre un exemple simplifié d'un système d'affichage d'informations relatives aux équipements d'un aéronef ;
- la figure 2 illustre schématiquement certaines étapes d'un algorithme permettant de déterminer les règles devant être appliquées pour gérer les informations à afficher ;
- la figure 3 illustre schématiquement certaines étapes mises en oeuvre pour gérer les informations devant être affichées dans un aéronef conformément à l'invention ;
- la figure 4 illustre un exemple de qualification des règles de traitement d'informations à afficher selon des paramètres du contexte représentés sous forme d'un modèle hiérarchique ;
- la figure 5 représente un exemple d'une page affichée dans un cockpit d'aéronef comprenant des informations déterminées conformément à l'invention ; et,
- la figure 6 illustre un exemple d'architecture matérielle adaptée à mettre en oeuvre l'invention.

De façon générale, l'invention a pour objet un système de gestion d'affichage d'informations dans un cockpit d'aéronef permettant à un utilisateur d'apprécier la situation dans laquelle se trouve l'aéronef, quelle qu'elle puisse être. Ce système se présente, de préférence, sous la forme d'une application logicielle. Il est basé sur la combinaison des fonctionnalités suivantes,
- la gestion de contexte : cette fonction permet de sélectionner les informations à afficher selon leur pertinence eu égard au contexte. Elle comprend deux particularités pour mettre en avant la situation actuelle et permettre la personnalisation de l'affichage selon des besoins de l'utilisateur ;
- la gestion de la continuité des vues : cette fonction a pour but de définir les passages d'une vue à une autre pour permettre à l'utilisateur de suivre facilement des séquences de vues afin d'améliorer le guidage de l'utilisateur à travers les informations affichées.

La gestion dynamique des données à afficher permet de soulager la tâche de gestion des systèmes de l'aéronef en identifiant au bon moment les données utiles.

Comme indiqué précédemment, les informations devant être affichées sont sélectionnées selon le contexte de telle sorte que seules les informations utiles soient présentées à l'utilisateur pour lui permettre de réagir de façon adéquat. La présentation des informations à afficher est également, de préférence, déterminée par le contexte. Ce dernier est ici lié à l'aéronef, à son environnement et à l'utilisateur.

Ainsi, le filtrage des informations à afficher est réalisé selon le contexte propre de l'aéronef pour ne sélectionner que les informations qui peuvent aider à appréhender une situation particulière. Les informations sélectionnées ici peuvent être de différents niveaux et liées à différents systèmes de l'aéronef.

En outre, le filtrage des informations devant être affichées et leur présentation sont déterminés selon l'utilisateur pour n'afficher que celles qui sont pertinentes pour lui. Par exemple, seules des informations d'un niveau particulier peuvent être pertinentes pour un utilisateur particulier. De même, seules les informations relatives à des systèmes particuliers de l'aéronef peuvent être pertinentes pour un utilisateur. Ce critère de sélection peut être basé sur un utilisateur ou, de façon avantageuse, sur son rôle, c'est-à-dire en fonction des applications exécutées. A titre d'illustration, les informations utiles à un pilote sont différentes de celles utiles à un technicien de maintenance.

Cette première sélection selon le contexte permet d'optimiser la quantité d'informations présentées à un utilisateur dans une situation donnée pour réduire sa charge de travail. A titre d'illustration, lorsque l'équipage cherche à déterminer s'il peut arrêter l'unité auxiliaire de puissance sans arrêter la seule source électrique, il n'a plus besoin de vérifier l'état de chaque source électrique de l'aéronef.

En outre, une gestion de niveau d'informations permet de sélectionner les informations pertinentes selon le contexte et les raisons pour lesquelles des informations doivent être affichées.

La continuité entre les vues permet de définir les passages entre chaque vue pour permettre à un utilisateur de suivre facilement une séquence de vues le guidant dans son analyse. Une telle continuité peut être générée de différentes façons, par exemple par guidage vocal ou en affichant des schémas synoptiques animés. Elle dépend notamment du rôle de l'utilisateur, c'est-à-dire des applications exécutées.

Une séquence de vues peut être interrompue par un changement de situation. Il est alors nécessaire de mettre en avant la rupture de la séquence pour qu'elle soit identifiée facilement. Cependant, la séquence peut être reprise à l'endroit où elle a été interrompue, en particulier lorsque la situation revient à l'état précédent l'interruption. A nouveau, la gestion des interruptions et des reprises de séquences est liée à la situation dans laquelle se trouve l'aéronef.

De façon avantageuse, toutes les transitions entre vues sont prédéterminées. Ainsi le guidage décrit ici est basé sur la connaissance de la situation de l'aéronef et sur la détection d'évènements. Selon cette approche, il est essentiellement demandé à l'équipage de réaliser des actions en fonction des paramètres dont ils disposent.

Ainsi, le guidage est de type « approche par état ». Ce type de guidage vise à éviter les éventuelles erreurs de modèle en évitant de définir des procédures basées sur la détection d'évènements et leurs interprétations, contrairement à un guidage de type événementiel qui définit des suites d'actions devant être réalisées par un utilisateur lors de la rencontre d'un événement attendu et connu.

Une erreur de modèle désigne ici le type d'erreurs commises lorsque l'utilisateur d'un système appréhende l'état de ce système de manière erronée. Cette mauvaise interprétation de la situation le conduit à ne pas réaliser les actions nécessaires à l'amélioration de cette situation, voire à réaliser des actions inappropriées entraînant une aggravation de celle-ci.

Ainsi, selon l'invention, il n'est pas demandé aux utilisateurs de comprendre pleinement la situation dans laquelle ces systèmes se trouvent, mais de réaliser des actions simples en fonction d'informations précises dont ils disposent et de vérifier que ces actions ont une conséquence qui fait évoluer la situation de ces systèmes dans la direction souhaitée.

Enfin, la présentation simplifiée des informations selon laquelle seules les informations pertinentes sont affichées permet à un utilisateur de les identifier rapidement. Ainsi, la zone d'affichage comprend ici en général peu d'informations, ou pas d'information, à un instant donné, renforçant ainsi le concept dit de « poste éteint » selon lequel seuls des paramètres relatifs à des anomalies sont identifiables.

La mise en oeuvre de l'invention nécessite, de préférence, lors de sa conception, une phase de détermination des règles qui devront être appliquées pour gérer les informations. Une seconde phase vise à acquérir les données utilisées pour identifier les informations devant être affichées. Enfin, une troisième phase permet de sélectionner les informations à afficher et de les afficher.

La figure 2 illustre schématiquement certaines étapes de la première phase visant à déterminer les règles devant être appliquées pour gérer les informations à afficher.

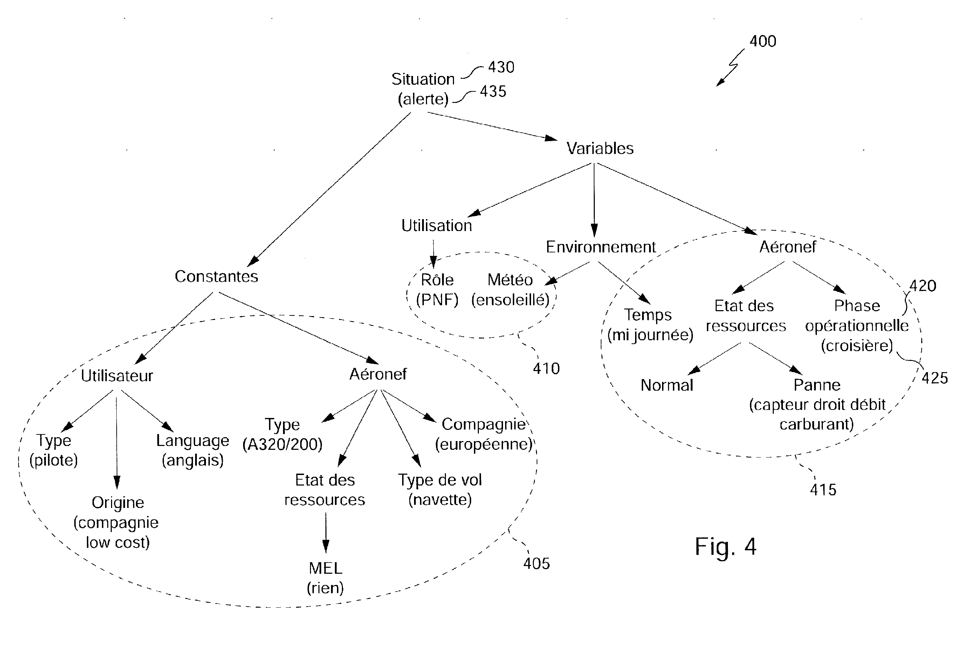

Une première étape (étape 200) consiste ici à définir le contexte et à identifier les données ou paramètres utilisés pour le caractériser. Selon un mode de réalisation particulier, il est défini selon un modèle ayant une structure prédéfinie, de préférence hiérarchique, telle que celle illustrée sur la figure 4. Cette structure est, par exemple, mémorisée dans la base de données 205. Cette étape vise également la détermination d'un modèle de traitement d'événements particuliers tels que, par exemple, la détection d'un incendie.

Une étape suivante (étape 210) a pour objet de définir les règles de traitement de l'information et/ou de combinaison d'informations, c'est-à-dire les règles qui permettent, à partir d'un contexte donné, de sélectionner les informations pouvant être affichées parmi l'ensemble des informations transmises au système de gestion d'affichage ou accessibles par ce dernier. Ces règles sont également mémorisées, ici, dans la base de données 205.

L'interface homme-machine est ensuite définie (étape 215), de préférence sous forme de règles, pour permettre une présentation optimale des informations sélectionnées à afficher et le passage entre vues. A nouveau, cette interface est ici mémorisée dans la base de données 205.

Il est également possible de définir des règles de personnalisation (étape 220) permettant de sélectionner certaines informations à afficher ou des façons de les afficher selon, notamment, des besoins particuliers des membres d'équipage ou de la compagnie aérienne exploitant l'aéronef. Ces règles sont ici mémorisées dans la base de données 225, indépendante de la base de données 205 pour permettre l'utilisation d'une base de données 205 et de plusieurs bases de données 225, la base de données 225 à utiliser étant choisie selon le contexte.

Après avoir été définis, ces paramètres et ces règles sont chargés dans le système de traitement de l'information de l'aéronef pour permettre la mise en oeuvre de l'invention dans ce dernier. Ces bases de données peuvent également être créées directement dans le système de traitement de l'information de l'aéronef.

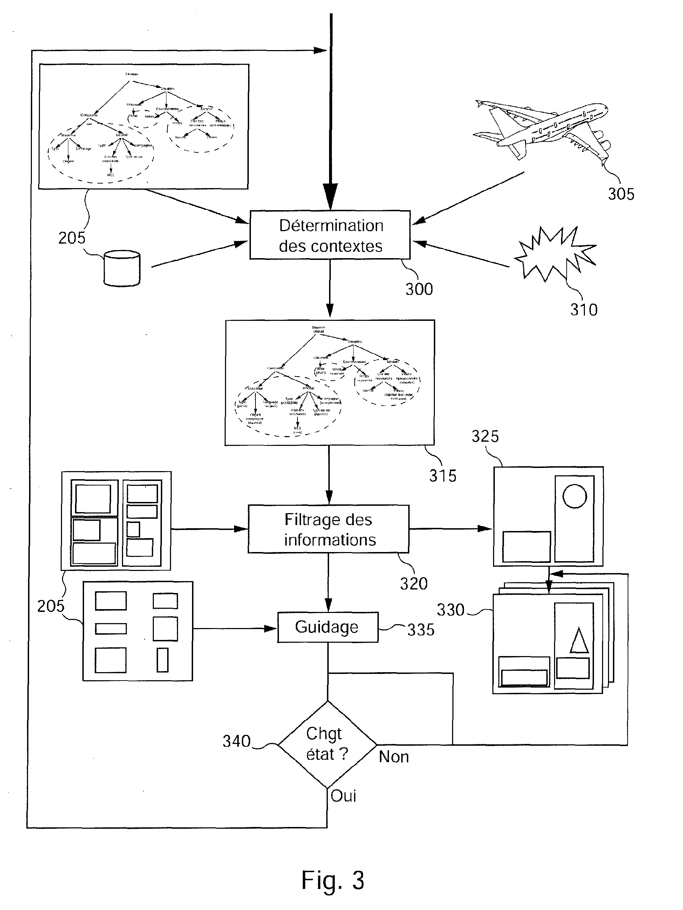

La figure 3 illustre schématiquement certaines étapes mises en oeuvre pour gérer les informations devant être affichées dans un aéronef conformément à l'invention.

Une première étape (étape 300) vise ici à déterminer le contexte. Cette étape est, d'une part, basée sur les définitions du contexte et des événements ayant un impact sur la gestion de l'affichage des informations, mémorisées dans la base de données 205, ainsi que, d'autre part, sur des données 305 issues, en particulier, de l'aéronef, par exemple des données issues de capteurs ou de calculateurs, et des événements 310 détectés dans le système de traitement de l'information de l'aéronef, par exemple le système d'alarme.

Cette étape permet d'évaluer le contexte qui est ici représenté sous la forme d'un arbre de situation (315) correspondant au modèle instancié du contexte.

Elle est suivie par une étape de filtrage (étape 320) des informations selon le contexte déterminé et les règles de traitement d'informations préalablement déterminées, complétées, le cas échéant, par des règles de personnalisation. Comme indiqué précédemment, ces règles sont ici mémorisées dans les bases de données 205 et 225, préalablement chargées dans l'aéronef. Les données filtrées sont ainsi sélectionnées parmi l'ensemble des données pouvant être affichées pour n'afficher que les données pertinentes.

Les données sélectionnées sont alors affichées (325). L'utilisateur peut modifier l'affichage pour accéder à d'autres vues en modifiant, par exemple, le niveau d'affichage.

Simultanément, les transitions entre vues sont, si nécessaire, déterminées en fonction du contexte pour permettre de guider l'utilisateur entre différentes vues (étape 335). Les vues affichées évoluent alors selon ces transitions, permettant ainsi le passage d'une première vue (325) à la vue suivante (330) comme défini dans la base de données (205).

Un test est ensuite effectué pour déterminer si l'état de l'aéronef a changé (étape 340). Si aucun changement n'est détecté, l'affichage des informations sélectionnées se poursuit, éventuellement selon les transitions déterminées préalablement. Si, au contraire, l'état de l'aéronef a changé, les étapes précédentes (étapes 300 à 335) sont répétées pour déterminer le contexte, sélectionner les informations à afficher et les afficher.

Pour définir le contexte, c'est-à-dire la situation dans laquelle se trouve un aéronef, les données prises en compte sont ici relatives à l'utilisateur, à l'aéronef et à son environnement.

Les données relatives à l'utilisateur sont, par exemple, les suivantes,
- le type : cette donnée permet de définir quel type d'informations doit être affiché. En déterminant, par exemple, si l'utilisateur est le pilote, un membre d'équipage de la cabine ou un technicien de maintenance, il est possible d'en déduire que les informations à afficher sont des informations fonctionnelles, des informations relatives à la cabine ou des informations relatives aux systèmes de l'aéronef, respectivement ;
- l'origine (ou la compagnie aérienne) : cette donnée peut, par exemple, être utilisée pour déterminer le format d'affichage des informations, notamment sous forme de texte ou de graphique et leur apparence ;
- la langue ; et,
- le rôle : il permet ici de sélectionner le type de vue. Si, par exemple, l'utilisateur est le pilote, les vues doivent être globales et de hauts niveaux pour lui permettre d'apprécier les capacités fonctionnelles de l'aéronef tout en lui permettant de se concentrer sur la tâche de pilotage. Inversement, si l'utilisateur est le copilote, un ingénieur de vol ou un autre membre d'équipage, les pages sont plus précises pour permettre la gestion de la configuration de l'aéronef, l'analyse de son environnement et assister le pilote.

Les données relatives à la configuration de l'aéronef sont, de préférence, les suivantes,
- le type d'aéronef : cette donnée est utilisée pour personnaliser les vues et définir les procédures. Le type d'aéronef peut concerner son rayon d'action (vol domestique, moyen-courrier ou long-courrier) et la nature du transport (fret ou passagers). Par exemple, si un incendie est détecté, les procédures varient selon les aéronefs et leur configuration ;
- le type de vol: cette donnée est également utilisée pour personnaliser les vues et définir les procédures. Il peut s'agir, par exemple, du remplissage de la cabine (vide ou plein) ou de caractéristiques telles que vol ETOPS (acronyme *d'Extended-range Twin-engine Operational Performance Standards* en terminologie anglo-saxonne) ou non. Ainsi, à titre d'illustration, une seule température peut être indiquée durant un vol avec une cabine vide tandis que les températures de chaque zone sont affichées lorsque la cabine est remplie ;
- la stratégie de la compagnie aérienne : ce paramètre aide à filtrer les informations pertinentes ;
- l'état des ressources de l'aéronef : les trois états suivants sont ici considérés pour déterminer le guidage :
   ■ état normal : tous les équipements de l'aéronef sont dans un état normal ;
   ■ équipements en panne : au moins un équipement ne fonctionne pas de façon nominale, c'est-à-dire qu'au moins une panne a été détectée dans le vol en cours. La connaissance de cette donnée, comprenant de préférence la liste des équipements en panne, permet de fournir un guidage ne mettant pas en oeuvre un équipement en panne ; et,
   ■ équipements non disponibles : au moins un équipement est hors d'usage et a entraîné un départ sous MEL (acronyme de *Minimum Equipment List* en terminologie anglo-saxonne). Les équipements non disponibles sont des équipements dont la panne a été détectée lors d'un vol précédent. La connaissance de cette donnée, comprenant de préférence la liste des équipements non disponibles, permet de fournir un guidage ne mettant pas en oeuvre des équipements tombés en panne avec des équipements indisponibles ;
- la phase opérationnelle de vol : cette donnée permet de filtrer les informations à afficher et de déterminer le guidage. A titre d'illustration, des informations pertinentes peuvent être affichées lorsque l'aéronef est en vol tandis qu'elles sont remplacées, au sol, par des informations plus pertinentes à ce moment là.

Les données relatives à l'environnement de l'aéronef sont, par exemple, les suivantes,
- météorologie et visibilité : cette donnée est utilisée pour personnaliser les vues et définir le guidage. Si, par exemple, les conditions météorologiques sont favorables à la formation de givre, les informations relatives aux fonctions de dégivrages sont affichées ; et,
- heure : cette donnée est également utilisée pour personnaliser les vues et définir les procédures. Ainsi, par exemple, les éclairages externes étant nécessaires durant la nuit, une indication correspondante peut être affichée durant les heures nocturnes et masquée le jour. De même, la température de la cabine étant plus finement régulée le jour que la nuit, la précision de la température affichée peut varier le jour et la nuit.

Il est observé en outre que certains événements peuvent être pris en considération pour déterminer l'état de l'aéronef. Par exemple, la connexion d'un ordinateur au système de traitement de l'information pour réaliser des tâches de maintenance permet d'identifier l'état « en maintenance » de l'aéronef.

Le contexte est notamment déterminé à partir de données mesurées par des capteurs de l'aéronef, traitées ou non, et de données préalablement saisies et enregistrées.

Pour déterminer le contexte de façon précise, toutes les situations sont envisagées. Cependant, leur nombre étant très important, il n'est pas possible de les définir de façon unitaire. Une solution est donc de les déterminer indirectement par des règles en fonction d'une structure arborescente ou hiérarchique d'un modèle de contexte. Une règle définie pour un noeud est ici applicable à tous les noeuds d'un niveau inférieur qui en dépendent.

Avant de définir les règles de traitement d'informations pour sélectionner les informations à afficher selon les données relatives au contexte, il est possible de les qualifier selon la fréquence de changement des informations.

La figure 4 illustre un exemple de qualification des règles de traitement d'informations à afficher selon des paramètres du contexte représentés sous forme d'un modèle hiérarchique 400. Selon cet exemple, trois fréquences de changement des informations sont définies : les paramètres qui ne changent pas durant un vol (référence 405), ceux qui changent peu fréquemment (référence 410) et ceux qui changent fréquemment (référence 415). Les paramètres qui ne changent pas durant un vol sont notamment le type de l'utilisateur, son origine et sa langue ainsi que le type d'aéronef, le type de vol, les équipements non disponibles et la compagnie. Les paramètres qui changent peu fréquemment sont, par exemple, le rôle de l'utilisateur et la météorologie. Les paramètres variant fréquemment sont ici l'heure, la phase opérationnelle et la liste des équipements en panne.

Les données associées aux paramètres, ici représentées entre parenthèses, définissent le contexte.

Par ailleurs, une granularité des informations est, de préférence, associée à chaque vue pour permettre de choisir le niveau de détail requis et ainsi aider l'utilisateur à comprendre rapidement la situation. Le niveau de granularité des informations à afficher est lié à l'objectif associé aux vues. Il varie d'une vision générale de l'aéronef dans son environnement à des paramètres précis de systèmes particuliers de l'aéronef. Il peut aussi s'agir de vues transversales permettant la visualisation d'informations liées à un système particulier mais ayant des effets généraux sur l'aéronef telles que les informations liées aux sources électriques.

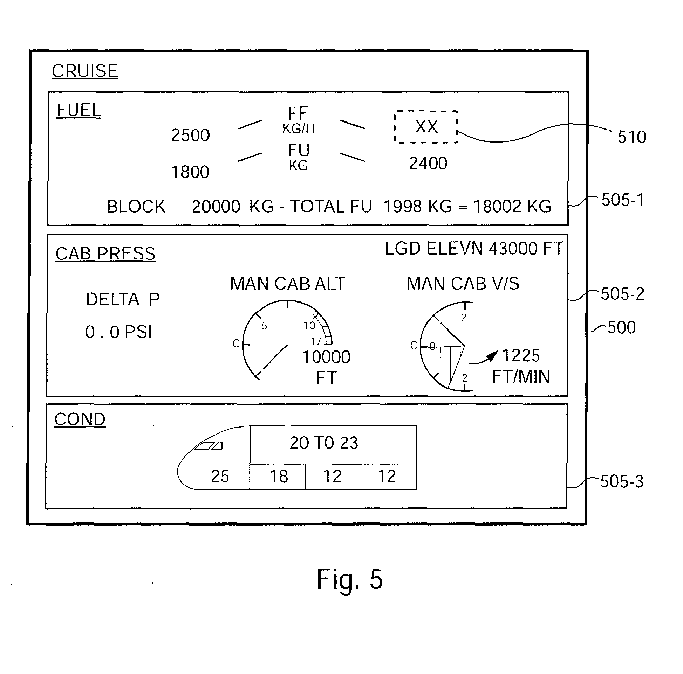

Il est ainsi possible, par exemple, d'utiliser les trois niveaux de granularité suivants,
- niveau 1 : ce niveau représente l'ensemble des informations relatives à une vue. En d'autres termes, le niveau 1 représente l'identification d'une vue, par exemple une vue « croisière » relative aux informations dont a besoin le pilote en phase de croisière. Une page représentative d'une telle vue est illustrée sur la figure 5 (référence 500) ;
- niveau 2 : il s'agit d'un niveau système qui caractérise les informations relatives à un système particulier d'une vue. Par exemple, dans la page « croisière » 500 représentée sur la figure 5, les informations affichées peuvent être liées aux systèmes de carburant (référence 505-1), de pressurisation (référence 505-2) et d'air conditionné (référence 505-3). Il est ainsi possible de contrôler séparément l'affichage de ces trois ensembles de données et de substituer à l'un ou plusieurs de ces ensembles un ou des ensembles plus pertinents au regard de la situation ; et,
- niveau 3 : ce niveau représente des informations unitaires. C'est le niveau le plus fin de l'interface homme-machine pour sélectionner l'affichage d'informations. Par exemple, dans la page « croisière » représentée sur la figure 5, il est possible de contrôler indépendamment l'affichage de chaque information telle que le débit de carburant alimentant le moteur droit de l'aéronef (référence 510).

Des données et des règles sont associées à chaque vue, pour chaque niveau du modèle de contexte, comme illustré dans les tables 1 à 4, données en annexe, afin d'identifier les informations à afficher et leur format en fonction du contexte.

La table 1 concerne le niveau 1 de la vue identifiée « SD ident », c'est-à-dire le niveau regroupant le plus d'information de cette vue. Chaque ligne correspond à une indication d'affichage d'une information en fonction de paramètres du contexte. Chaque indication est ici donnée en fonction d'un premier paramètre d'un premier niveau hiérarchique de la structure utilisée pour définir le contexte et d'un second paramètre lié à ce premier paramètre et appartenant niveau inférieur.

La table 2 indique les règles qui doivent être appliquée pour afficher les informations sélectionnées, toujours pour le niveau 1. Les règles spécifiées dans la table 2 définissent le format d'affichage des informations de toutes les vues.

Ces tables définissent ainsi toutes les règles génériques devant s'appliquer au contenu de la page identifiée, telles que le langage devant être utilisé, le niveau des informations disponibles, le type d'informations et le format d'affichage.

Ainsi, à titre d'illustration et selon la table 1, lorsque la phase opérationnelle (premier niveau du modèle hiérarchique du contexte) est « sol » ou « approche » (deuxième niveau du modèle hiérarchique du contexte), les informations accédées par la page « SD ident » sont liées au système du train d'atterrissage (WHEEL). De façon similaire, en situation nominale, les informations sont de niveau élevé tandis que si une alerte est générée, des informations complémentaires de plus bas niveau compléteront la vue donnée à l'équipage afin de lui permettre de traiter plus facilement la panne. Le pilote accède ici à un ensemble de vues qui peuvent être différentes des vues accessibles par un technicien ou un membre de l'équipage cabine.

La table 2 a pour objet de définir la couleur et le mode d'affichage des informations selon leur nature et le contexte. Ainsi, par exemple, il est indiqué qu'en ce qui concerne l'état des ressources de l'aéronef, les informations relatives à un élément sous MEL sont affichées en gris, les informations relatives à des éléments fonctionnant normalement sont affichées en vert et les informations relatives aux éléments en panne sont affichées avec la couleur ambre. En outre, selon la situation, les informations sont affichées de façon classique ou clignotante (clignotement lent ou rapide).

La table 3 est relative à certaines informations de niveau 2 pour la même vue « SD ident », ici le niveau de carburant. Comme en ce qui concerne la table 1, la table 3 indique le niveau des informations pouvant être affichées (niveau élevé, niveau intermédiaire ou niveau bas). Il est également précisé quelles valeurs doivent affichées selon l'état des éléments concernés. Ainsi, par exemple, aucune information propre à un élément sous MEL n'est affichée. Toujours à titre d'illustration, l'unité d'affichage des valeurs dépend ici de l'origine de la compagnie arienne exploitant l'aéronef. Ainsi, les données sont affichées en litres et kilogrammes pour les compagnies aériennes européennes. Si le format des informations reçues devant être affichées ne correspond pas au format d'affichage, le format des informations reçues est modifié selon le format d'affichage utilisé.

Il convient d'observer ici qu'il existe pour chaque table, une table similaire de même niveau pour chaque élément de niveau supérieur associé à la vue identifiée « SD ident ».

La table 4 illustre un exemple d'une table associée à un élément du niveau 3 de la vue « SD ident », ici le débit de carburant. Comme représenté, la table 3 a pour objet de définir la précision devant être utilisée pour afficher le débit de carburant en fonction de la situation.

La table 5 illustre la sélection de règles d'affichage parmi celles données dans les tables 1 à 4 en fonction du contexte défini en référence à la figure 4. Les règles sélectionnées sont ici indiquées par l'utilisation de caractères gras, italiques et soulignés. La mise en oeuvre de ces règles conduit au résultat illustré sur la figure 5.

Comme représenté sur la figure 4, la phase opérationnelle (420) est ici « croisière » (425). Il en résulte, selon la table 1, que la page affichée est « croisière » (CRUISE). De façon similaire, la situation (430) est « alerte » (435). Par conséquent, l'information affichée est, selon les tables 1 et 3, de bas niveau, le format et le mode d'affichage étant, selon la table 2, de type clignotement rapide et, selon la table 4, utilisant une précision de 1.

Ainsi, l'application de l'ensemble des règles données par les tables 1 à 4 en fonction du contexte permet de sélectionner les informations affichées ainsi que le mode d'affichage (unité, couleur, ...).

Les informations fournies à l'utilisateur de cette façon contiennent toutes les données nécessaires pour apprécier la situation de l'aéronef à un instant donné, c'est-à-dire dans un contexte donné.

Néanmoins, comme indiqué précédemment, une fonction de guidage est de préférence mise en oeuvre en fonction de règles prédéterminées. Celles-ci sont, de préférence, mémorisées dans un modèle de guidage, sous forme de tables de règles. Celles-ci sont liées au rôle de l'utilisateur, à l'aéronef et à son environnement de telle sorte que le guidage proposé au pilote peut différer de celui proposé à un technicien lors d'une phase de maintenance, au sol.

Les modèles de guidage sont ici particulièrement adaptés à guider l'utilisateur dans des situations dans lesquelles un ou plusieurs événements sont détectés.

La table 6 illustre un exemple de modèle de guidage pour des événements particuliers. Pour chaque événement indiqué dans la première colonne et en fonction de particularités du contexte telles que définies dans la deuxième colonne, une suite d'informations à afficher est donnée (chaque ligne de cette suite d'informations représente ici une partie de la séquence guidée). Ainsi, à titre d'illustration, si un moteur est en feu en dehors de la première phase de montée, la poussée du moteur est affichée avec une indication de cible correspondant à un régime de ralenti du moteur. Une commande d'arrêt du moteur est ensuite présentée à l'utilisateur. Une commande d'activation d'un extincteur est alors exécutée et une indication correspondante est affichée.

Il est observé ici que le guidage étant défini par des règles dépendantes du contexte, le guidage lié à un même événement peut varier. Par exemple, la procédure à suivre lorsqu'un moteur est en feu n'est pas la même que celle à suivre lorsque tous les moteurs sont en feu.

Par ailleurs, si les tables 1 à 6 sont ici données dans un format compréhensible, dans un but illustratif, elles sont, de préférence, codées dans un format optimisé pour réduire la mémoire nécessaire à leur stockage et faciliter leur gestion.

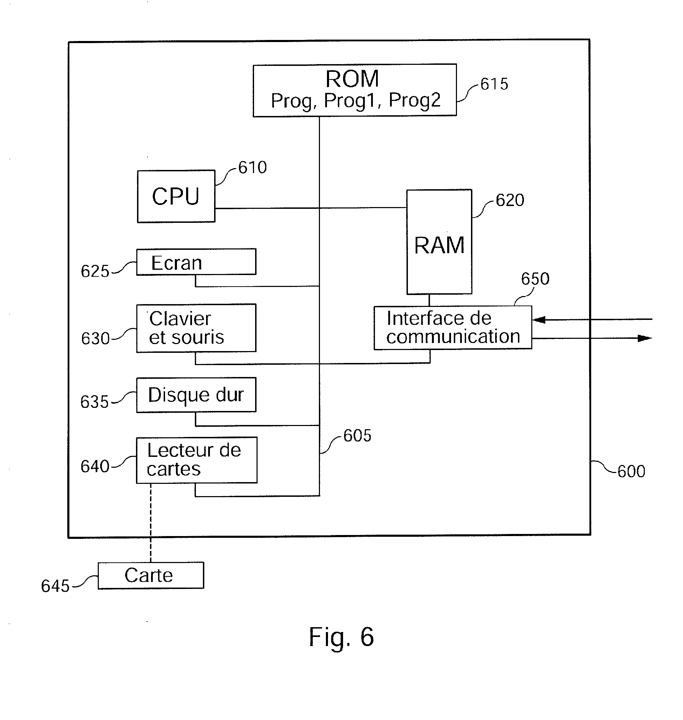

La figure 6 illustre un exemple d'architecture matérielle adaptée à mettre en oeuvre l'invention, notamment l'algorithme représenté sur la figure 3. Le dispositif 600 comporte ici un bus de communication 605 auquel sont reliés :
- une ou plusieurs unités centrales de traitement ou microprocesseurs 610 (CPU, sigle de *Central Processing Unit* en terminologie anglo-saxonne) ;
- une mémoire morte 615 (ROM, acronyme de *Read Only Memory* en terminologie anglo-saxonne) pouvant comporter les programmes nécessaires à la mise en oeuvre de l'invention ;
- une mémoire vive ou mémoire cache 620 (RAM, acronyme de *Random Access Memory* en terminologie anglo-saxonne) comportant des registres adaptés à enregistrer des variables et paramètres créés et modifiés au cours de l'exécution des programmes précités ; et
- une interface de communication 650 adaptée à transmettre et à recevoir des données, notamment vers et depuis les dispositifs commandés de l'aéronef pour les contrôler et connaître leur état.

Le dispositif 600 dispose également, de préférence, des éléments suivants :
- une ou plusieurs unités d'affichage 625 permettant de visualiser des données telles que des informations liées à l'état de l'aéronef et pouvant servir d'interface graphique avec l'utilisateur qui pourra interagir avec les programmes selon l'invention, à l'aide d'un clavier et d'une souris 630 ou d'un autre dispositif de pointage tel qu'un écran tactile ou une télécommande ;
- d'un disque dur 635 pouvant comporter les programmes précités et des données traitées ou à traiter selon l'invention ; et
- d'un lecteur de cartes mémoires 640 adapté à recevoir une carte mémoire 645 et à y lire ou à y écrire des données traitées ou à traiter selon l'invention.

Le bus de communication permet la communication et l'interopérabilité entre les différents éléments inclus dans le dispositif 600 ou reliés à lui. La représentation du bus n'est pas limitative et, notamment, l'unité centrale est susceptible de communiquer des instructions à tout élément du dispositif 600 directement ou par l'intermédiaire d'un autre élément du dispositif 600.

Le code exécutable de chaque programme permettant au dispositif programmable de mettre en oeuvre les processus selon l'invention, peut être stocké, par exemple, dans le disque dur 635 ou en mémoire morte 615.

Selon une variante, la carte mémoire 645 peut contenir des données, notamment une table de correspondance entre les événements détectés et les commandes pouvant être sollicitées, ainsi que le code exécutable des programmes précités qui, une fois lu par le dispositif 600, est stocké dans le disque dur 635.

Selon une autre variante, le code exécutable des programmes pourra être reçu, au moins partiellement, par l'intermédiaire de l'interface 650, pour être stocké de façon identique à celle décrite précédemment.

De manière plus générale, le ou les programmes pourront être chargés dans un des moyens de stockage du dispositif 600 avant d'être exécutés.

L'unité centrale 610 va commander et diriger l'exécution des instructions ou portions de code logiciel du ou des programmes selon l'invention, instructions qui sont stockées dans le disque dur 635 ou dans la mémoire morte 615 ou bien dans les autres éléments de stockage précités. Lors de la mise sous tension, le ou les programmes qui sont stockés dans une mémoire non volatile, par exemple le disque dur 635 ou la mémoire morte 615, sont transférés dans la mémoire vive 620 qui contient alors le code exécutable du ou des programmes selon l'invention, ainsi que des registres pour mémoriser les variables et paramètres nécessaires à la mise en oeuvre de l'invention.

Naturellement, pour satisfaire des besoins spécifiques, une personne compétente dans le domaine de l'invention pourra appliquer des modifications dans la description précédente.

### ANNEXE

**Table 1**

| **Information** | **Contexte (niveau 1)** | **Contexte (niveau 2)** | **Veleurs/régles** |
|---|---|---|---|
| SD ident | Phase opérationnelle | Sol | WHEEL |
| | | Décollage | F/CTL |
| | | Croisière | CRUISE |
| | | Approche | WHEEL |
| | Situation | Nominale | Niveau élevé (peu de détails) |
| | | Fait Marquant | Niveau intermédiaire (vue plus précise sur le fait marquant) |
| | | Alarme (ambre) | Niveau bas (détails sur les paramètres liés à l'alarme) |
| | | Alarme (rouge) | Niveau bas (détails sur les paramètres liés à l'alarme ainsi que sur toute la fonction aéronef concernée) |
| | Utilisateur | Langue | Anglais |
| | Type | Pilote | Pages systèmes seulement |
| | | Maintenance | Toutes |
| | | Equipage cabine | Page croisière seulement |

**Table 2**

| | **Elément** | **Valeur** | **Règle** |
|---|---|---|---|
| SD IHM | Etat des ressources de l'aéronef | Elément MEL | Gris |
| | | Nominal | Vert |
| | | Panne | Ambre |
| | Situation | Nominal | Normal |
| | | Fait Marquant | Clignotement lent |
| | | Alarme (ambre) | Clignotement rapide |
| | | Alarme (rouge) | Clignotement rapide |

**Table 3**

| **Information** | **Contexte (niveau 1)** | **Contexte (niveau 2)** | **Valeurs/régles** |
|---|---|---|---|
| Niveau carburant | Situation | Nominale | Niveau élevé |
| | | Fait Marquant | Niveau intermédiaire |
| | | Alarme (ambre) | Niveau bas |
| | | Alarme (rouge) | Niveau bas |
| | Etat des ressources de l'aéronef | Elément MEL | Affichage de la symbologie signifiant « Non disponible » |
| | | Nominal | Affichage de la valeur |
| | | Panne | Affichage 'XX' |
| | Compagnie aérienne | US | Unités : QT, LBS |
| | | Europe | Unités : L, KG |

**Table 4**

| **Information** | **Contexte (niveau 1)** | **Contexte (niveau 2)** | **Veleurs/régles** |
|---|---|---|---|
| IHM Débit de carburant | Situation | Nominal | Précision 100 |
| | | Fait Marquant | Précision 10 |
| | | Alarme | Précision 1 |

**Table 5**

| **Information** | **Contexte (niveau 1)** | **Contexte (niveau 2)** | **Veleurs/régles** |
|---|---|---|---|
| SD ident | Phase opérationnelle | Sol | WHEEL |
| | | Décollage | F/CTL |
| | | Croisière | ***CRUISE*** |
| | | Approche | WHEEL |
| | Situation | Nominale | Niveau élevé |
| | | Fait marquant | Niveau intermédiaire |
| | | Alarme (ambre) | ***Niveau bas*** |
| | | Alarme (rouge) | Niveau bas |
| | User | Langue | Anglais |
| | Type | Pilote | Pages systèmes seulement |
| | | Maintenance | Toutes |
| | | Equipage cabine | Page croisière seulement |
| SD IHM | Etat ressources de l'aéronef | Elément MEL | Gris |
| | | Nominal | Vert |
| | | Panne | ***Ambre*** |
| | Situation | Nominale | Normal |
| | | Fait Marquant | Clignotement lent |
| | | Alarme (ambre) | ***Clignotement rapide*** |
| | | Alarme (rouge) | Clignotement rapide |
| Niveau carburant | Situation | Nominale | Niveau élevé |
| | | Fait Marquant | Niveau intermédiaire |
| | | Alarme (ambre) | ***Niveau bas*** |
| | | Alarme (rouge) | Niveau bas |
| | Etat ressources de l'aéronef | Elément MEL | Affichage de « Non disponible » |
| | | Nominal | Affichage de la valeur |
| | | Panne | ***Affichage `XX'*** |
| | Compagnie aérienne | US | Unités : QT, LBS |
| | | Europe | ***Unités : L. KG*** |
| IHM Débit de carburant | Situation | Nominale | Précision 100 |
| | | Fait Marquant | Précision 10 |
| | | Alarme | ***Précision 1*** |

**Table 6**

| **Evénement** | **Spécificité du contexte** | **Guidage** |
|---|---|---|
| Demande de configuration d'atterrissage | Vol en conditions nominales | Afficher la valeur barométrique de référence ('Baro ref.'), permettre sa modification et présenter une commande de validation |
| | | Afficher la valeur 'Minima', permettre sa modification et présenter une commande de validation |
| | | Allumer le bouton de commande "Seat belt ON". |
| | Au moins une panne a été détectée durant le vol | Afficher l'état général de l'aéronef, présenter les limitations opérationnelles et activer une commande de vérification |
| | | Afficher la valeur barométrique de référence ('Baro ref.'), permettre sa modification et présenter une commande de validation |
| | | Afficher la valeur'Minima', permettre sa modification et présenter une commande de validation |
| | | Présenter la com mande d 'affichage 'Seat belt ON' |
| Moteur en feu | Durant la première partie de la Ignorer le problème phase de montée | |
| | Le reste du temps | Afficher la poussée du moteur ainsi qu'un symbole de référence de ralenti |
| | | Présenter la commande d'arrêt du moteur |
| | | Activer la commande d'extincteur et afficher une indication correspondante |
| | | ... |
| Panne d'une pompe de carburant | Au sol ou en croisière | Activer la commande d'arrêt de la pompe défaillante, afficher une indication correspondante et désactiver la commande de toutes les autres pompes |
| | Le reste du temps | Ignorer le problème |

## Revendications

1. Procédé de gestion d'informations dans un aéronef, ledit aéronef comprenant au moins un dispositif de restitution d'information à l'équipage et une pluralité d'équipements adaptés à transmettre des informations susceptibles d'être restituées sur ledit au moins un dispositif de restitution, ce procédé étant **caractérisé en ce qu'**il comprend les étapes suivantes,
- acquisition d'une pluralité d'informations de ladite pluralité d'équipements ;
- détermination (300) d'un contexte, ledit contexte correspondant à une instanciation d'un modèle hiérarchique prédéterminé de contexte ;
- filtrage (320) de ladite pluralité d'informations selon au moins une règle pour sélectionner au moins une information de ladite pluralité d'informations, ladite au moins une règle étant liée audit contexte et étant applicable à tous les éléments dépendant d'un noeud dudit modèle, auquel ladite règle est appliquée, le niveau desdits éléments dans ledit modèle hiérarchique étant inférieur à celui dudit noeud ; et,
- restitution de ladite au moins une information sélectionnée.

2. Procédé selon la revendication 1 comprenant en outre les étapes suivantes,
- ordonnancement d'informations parmi une pluralité d'informations sélectionnées ; et,
- restitution (335) desdites informations ordonnancées selon au moins une règle de guidage, ladite au moins une règle de guidage étant liée audit contexte pour sélectionner au moins une information.

3. Procédé selon la revendication précédente comprenant en outre une étape de modification dudit filtrage de ladite pluralité d'informations et/ou dudit ordonnancement d'informations parmi une pluralité d'informations sélectionnées selon au moins une règle de guidage prédéterminée et selon ledit contexte déterminé selon au moins une caractéristique dudit aéronef.

4. Procédé selon l'une quelconque des revendications précédentes selon lequel ledit contexte est déterminé selon au moins une caractéristique dudit aéronef, au moins un état d'au moins un équipement de ladite pluralité d'équipements, au moins une donnée relative à l'environnement dudit aéronef et/ou au moins une donnée relative à un utilisateur dudit procédé.

5. Procédé selon l'une quelconque des revendications précédentes comprenant en outre une étape de réception d'une indication représentative de la détection d'au moins un événement prédéterminé, ladite au moins une règle étant liée à ladite indication.

6. Procédé selon l'une quelconque des revendications précédentes comprenant en outre une étape de modification du format de ladite au moins une information sélectionnée.

7. Programme d'ordinateur comprenant des instructions adaptées à la mise en oeuvre de chacune des étapes du procédé selon l'une quelconque des revendications précédentes lorsque ledit programme est exécuté sur un ordinateur.

8. Dispositif comprenant des moyens adaptés à la mise en oeuvre de chacune des étapes du procédé selon l'une quelconque des revendications 1 à 6.

9. Aéronef comprenant le dispositif selon la revendication précédente.
